# EUROPÄISCHE PATENTSCHRIFT

(11) **EP 1 481 844 B1**
(45) Veröffentlichungstag und Bekanntmachung des Hinweises auf die Patenterteilung: **22.02.2006**
(21) Anmeldenummer: 04011157.7
(22) Anmeldetag: 11.05.2004
(51) Int. Cl.: B60P 7/15, B60P 7/08, B64D 9/00

(54) **Zurrpunktvorrichtung für ein Frachtladesystem eines Transportmittels, insbesondere eines Flugzeuges**
Cargo tie down system
Système d'arrimage pour cargaison

(30) Priorität: 30.05.2003 DE 10324649
(43) Veröffentlichungstag der Anmeldung: 01.12.2004
(73) Patentinhaber: Airbus Deutschland GmbH, 21129 Hamburg (DE)
(72) Erfinder: Borrmann, Carsten, Dipl.-Ing., 28870 Ottersberg (DE); Vogg, Günter, Ing., 28307 Bremen (DE)
(74) Vertreter: Hansmann, Dierk

(56) Entgegenhaltungen:
- EP-A- 0 753 457
- EP-A- 0 894 713
- US-A- 3 212 457
- US-A- 4 630 982

## Beschreibung

Die Erfindung betrifft eine Zurrpunktvorrichtung für ein Frachtladesystem eines Transportmittels insbesondere eines Flugzeuges, welches ein Zurrelement zum Verzurren von Lasten oder Gütern umfasst und das Zurrelement an einem Gehäuse gelagert und um eine Schwenkachse drehbar ist.

Transportmittel wie Flugzeuge werden unter anderem zum Befördern von Fracht verwendet. Die zu transportierenden Frachtgüter können sehr vielfältig ausgebildet sein. Es werden genormte Frachteinheiten, üblicherweise ULD's (ULD - Unit load device) genannt, transportiert, die als Container, Paletten oder Netze ausgebildet sein können. Darüber hinaus werden auch ungenormte Güter wie beispielsweise auf Spanplatten verzurrte Säcke oder Fahrzeuge transportiert. Die vergleichsweise hohen Lasten der Frachtgüter, insbesondere für den Transport von militärischen Frachtgütern, stellen sehr hohe Anforderungen bezüglich der Statik und Struktur an den Fußbodenaufbau und an die erforderlichen Lastenzurrpunkte. Lastenzurrpunkte sind vorgesehen, um Lasten mittels eines Zurrringes festzurren zu können. Die Zurrpunkte werden zahlreich und meistens in gleichen Abständen im Frachtraum verteilt. Der jeweils zu einem Zurrpunkt dazugehörige Zurrring ist an der Flugzeugstruktur angebunden, beispielsweise üblicherweise an Spanten verschraubt, um große Kräfte und Momente in alle Richtungen aufnehmen zu können. Für den Transport von zivilen Frachtpaletten sind derartige Zurrpunkte jedoch nicht einsetzbar. Hier sind übliche XZ- sowie YZ-Riegel notwendig, die beispielsweise aufgebaut sind wie aus DE 39 43 077, DE 41 02 274 oder EP 0 753 457 bekannte Riegelelemente, um entsprechende Frachteinheiten innerhalb des Frachtladesystems zu verriegeln. Eine Verzurrung mittels Zurrringen ist aufgrund fehlender Befestigungsmöglichkeiten an derartigen Frachteinheiten nicht möglich. Die bekannten Riegelelemente sind zum Arretieren von Frachteinheiten an einer vorgesehenen Stauposition vorgesehen; beispielsweise sind XZ-Riegel bekannt, die sowohl in Längsrichtung des Flugzeuges (x-Richtung) als auch in vertikaler Richtung (z-Richtung) das Frachtstück durch Eingreifen in entsprechende Vorsprünge oder Aufnahmen fixieren. Bekannte YZ-Riegel greifen seitlich an das Frachtstück an und verriegeln in lateraler Richtung (y-Richtung) und in vertikaler Richtung (z-Richtung). Der Einsatz derartiger Riegel erfordert jedoch eine strukturfeste Befestigung am Fußboden eines Frachtdecks.

Aus EP 894 713 A1 ist ein Zurrelement für die Sicherung von nichtgenormten Frachten beschrieben. Ein Gehäuse mit einer Aufnahme für den Zurrring weist im wesentlichen eine quaderförmige Grundform auf und wird mittels Befestigungsschrauben direkt am Flugzeugdeck befestigt, wobei dadurch die Lagerung des Zurrringes gebildet ist. Eine derartige Befestigung des Gehäuses führt auf dem Flugzeugdeck zu Unebenheiten auf dem Fußboden. Somit besteht u.a. Stolpergefahr für das Beladepersonal oder es führt zu Problemen beim Beladen.

US-A-3 212 457 zeigt ein Zurrelement, das an einem Grundkörper angeordnet ist, wobei dieser Grundkörper in als Schienenprofile ausgebildete Hefestigungsaufnahmen auf dem Flugzeugboden verriegelt werden kann und damit als Befestigungspunkte für nicht genormte Frachtgüter dient. Diese Zurrelemente erlauben jedoch nicht, dass weitere Komponenten, beispielsweise eines Frachtladesystems, aufgenommen oder befestigt werden können.

Somit liegt der Erfindung die Aufgabe zugrunde eine Zurrpunktvorrichtung zu entwickeln, welche den Transport und die Verzurrung/Verriegelung von Frachtgütern universeller Art ermöglicht und so ausgebildet ist, dass sie in einen Flugzeugfußboden integriert werden kann. Die Vorrichtung soll neben der Verzurrmöglichkeit von Frachtpaletten die Möglichkeit der Verriegelung von Frachteinheiten bieten. In einer nur kurzen Umrüstzeit soll durch ein Minimum von Bedienpersonal eine Anpassung an die vorgesehene Transportaufgabe erfolgen können.

Diese Aufgabe wird erfindungsgemäß durch die im Patentanspruch 1 genannten Maßnahmen gelöst.

Dabei ist insbesondere vorteilhaft, dass mit der erfindungsgemäßen Zurrpunktvorrichtung in einfacher, zuverlässiger weise ein Frachtladesystem entsprechend der Transportaufgabe schnell umgerüstet werden kann. Die erfindungsgemäßen Zurrpunktvorrichtungen realisieren eine Doppelfunktion, was durch das wegklappen des Zurrelementes ermöglicht wird. Wenn kein Frachtgut mittels des Zurrelementes arretiert wird, kann - bei heruntergeklapptem Zurrelement - die Befestigungsaufnahme in der Ausbildung des Schienenprofils genutzt werden zur Arretierung von Riegelelementen oder möglicherweise auch weiteren Komponenten des Frachtladesystems.

Es ist eine Gewichtseinsparung erreicht, da die erfindungsgemäße Zurrpunktvorrichtung neben einem Zurrpunktanschluss auch andere Komponenten aufnehmen kann und hierfür keine zusätzlichen Bauteile notwendig sind.

Weiterbildungen und vorteilhafte Ausgestaltungen der Erfindung sind in den Ansprüchen 2 bis 8 angegeben. Weitere Einzelheiten und vorteile ergeben sich aus der nachfolgenden Beschreibung von Ausführungsbeispielen der Erfindung.

In der Zeichnung ist die Erfindung anhand der Figuren 1 bis 11 näher dargestellt und nachfolgend beschrieben. In den Figuren sind gleiche Bauteile mit gleichen Bezugszeichen versehen.

Es zeigen im einzelnen:
- Fig. 1: eine erfindungsgemäße Zurrpunktvorrichtung in einer Perspektivansicht,
- Fig. 2: die erfindungsgemäße Zurrpunktvorrichtung gemäß Fig. 1 mit hochgeklapptem Zurrelement,
- Fig. 3: eine Draufsicht auf die Zurrpunktvorrichtung,
- Fig. 4: eine Schnittdarstellung der Zurrpunktvorrichtung gemäß der Schnittlinie A3-A3,
- Fig. 5 bis 7: eine Verwendungsmöglichkeit der Zurrpunktvorrichtung in Kombination mit einem XZ-Riegelelement,
- Fig. 8 bis 10: eine Verwendungsmöglichkeit der Zurrpunktvorrichtung in Kombination mit einem YZ-Riegelelement und
- Fig. 11: eine zweite Ausführungsform der Zurrpunktvorrichtung.

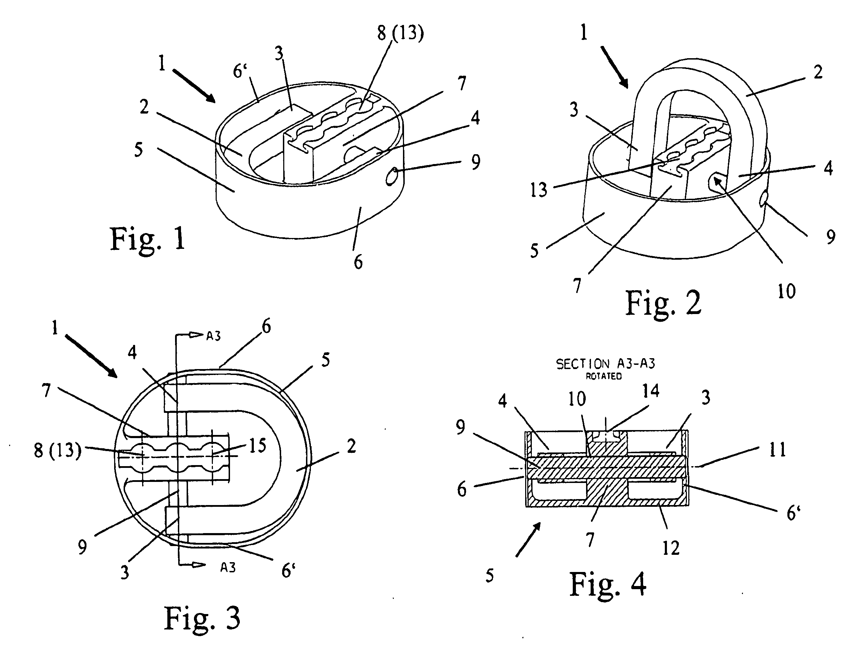

In den Figuren 1 und 2 ist eine erfindungsgemäße Zurrpunktvorrichtung 1 in jeweils einer Perpektivdarstellung mit einem heruntergeklapptem Zurrelement 2 (Fig. 1) bzw. mit einem hochgeklapptem Zurrelement 2 (Fig. 2) gezeigt. Die Zurrpunktvorrichtungen 1 werden in zum Transport genutzten Verkehrsmitteln, vorzugsweise in Flugzeugen zum Befestigen des Frachtgutes verwendet. Sie werden zahlreich und meist in gleichen Abständen über den gesamten Frachtraum verteilt. Sie sind direkt an der Flugzeugstruktur befestigt und können über die Zurrelemente 2 große statische Kräfte aufnehmen. Das Zurrelement 2 weist in der gezeigten Ausführungsform eine um 90° gedrehte-D-Form auf, möglich sind jedoch auch andere Formen für einen Zurrring. Mit der D-Form ist eine Verlängerung des Bogens in zwei Endabschnitte 3 und 4 erreicht, die zur Verbindung mit einem Grundkörper bzw. Gehäuse 5 ausgebildet sind. Das Gehäuse 5 ist beispielsweise topfförmig ausgebildet, wobei die Gehäusewandungen 6, 6' ein Innenteil 7 mit einer Befestigungsaufnahme 8 umschließen. Die Endabschnitte 3 und 4 sind jeweils mit Querbohrungen versehen durch die ein Verbindungsbolzen 9 gesteckt wird.

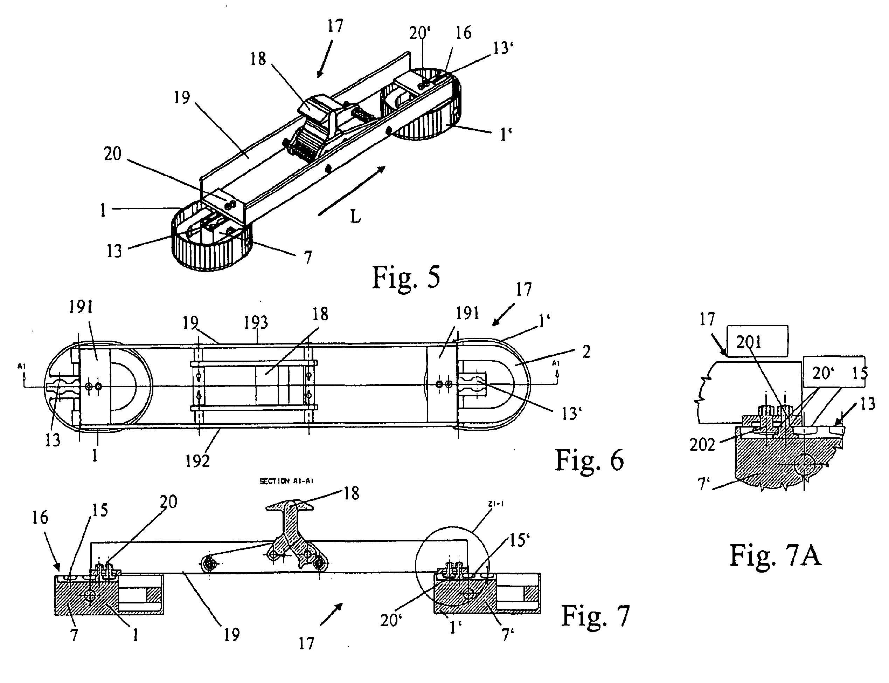

Die Anordnung der einzelnen Bauteile ist in den Ansichten der Figuren 3 und 4 detailliert ersichtlich. Der Verbindungsbolzen 9 ist am Gehäuse 5 an den sich jeweils gegenüberliegenden Gehäusewandungen 6 und 6' gelagert. Darüber hinaus ist der Verbindungsbolzen 9 in einer Aufnahme 10 des Innenteils 7 angeordnet. Das Zurrelement 2 ist somit um eine Schwenkachse 11 schwenkbar und kann bei Nichtgebrauch in eine horizontale Lage geschwenkt werden, wie es in Fig. 1 gezeigt ist. Das topfförmige Gehäuse 5 kann im Bereich einer Bodenplatte 12 entsprechend des Einsatzfalles im Frachtladedeck vorzugsweise direkt an einer Flugzeugstruktur, beispielsweise an Spanten befestigt werden. Übliche Befestigungsmethoden wie Verschrauben oder Vernieten werden dafür genutzt. Durch die Befestigung der Zurrpunktvorrichtung 1 an der tragenden Struktur können die durch das Frachtgut hervorgerufenen Lasten bzw. Kräfte aufgenommen und in die tragende Struktur abgeführt werden Ein wesentlicher Bestandteil der zurrpunktvorrichtung 1 ist das Innenteil 7, welches fest mit dem Gehäuse 5 verbunden oder einstückig mit ihm hergestellt ist. Das Innenteil 7 dient neben der Lagerung des schwenkbaren Zurrelementes 2 als Befestigungspunkt von weiteren Komponenten und ist an der Oberseite mit einem Schienenprofil 13 als Befestigungsaufnahme 8 versehen. Das Schienenprofil 13 verläuft in einer Ebene oberhalb der Schwenkachse 11 des Zurrelementes 2. Das Schienenprofil 13 ist in verkehrsflugzeugen üblicherweise bekannt zur Verwendung in Sitzschienen als Sitzschienenprofil zur Befestigung von Komponenten oder Sitzen in einer Flugzeugpassagierkabine. Es weist einen schwalbenschwanzförmigen Querschnitt 14 auf, in dem in einem Abstand von einem Zoll Bohrungen 15 als Einrastlöcher eingebracht sind. In das Sitzschienenprofil 13 können Rastelemente 20 (siehe nachfolgende Figuren 5 bis 10) über die Einrastlöcher 15 eingeführt und im Sitzschienenprofil 13 verriegelt werden. Die Rastelemente 20 sind üblicherweise bekannt und können aus zwei Elementen bestehen, einem pilzförmigen Element 201 zur Aufnahme der z-Kräfte, wenn es im schwalbenschwanzförmigen Profil 14 einrastet, und einem zylinderförmigen Element 202 zur Aufnahme von XY-Kräften (siehe Fig. 7A).

In den Figuren 5 bis 10 sind Verwendungsmöglichkeiten der Zurrpunktvorrichtung 1 in Kombination mit Riegelelementen 17 und 21 gezeigt, wobei die Riegelelemente durch Übergreifen oder Eingreifen in dafür vorgesehene Aussparungen an der Frachteinheit bzw. am Frachtgut das Arretieren von Frachtpaletten oder Frachtstücken ermöglichen. In den Fign. 5 bis 7 ist die Anordnung eines XZ-Riegelelementes 17 gezeigt, der sowohl in Längsrichtung L des Flugzeuges (x-Richtung) als auch in vertikaler Richtung (z-Richtung) das Frachtstück durch Eingreifen in entsprechende Vorsprünge oder Aufnahmen fixieren kann. Eine dafür vorgesehene Riegelklaue 18 ist an einer Traverse 19 angeordnet, die mittels Rastelementen 20 und 20' in zwei in Flugzeuglängsrichtung L verlaufende Zurrpunktvorrichtungen 1 und 1' fixiert wird und damit eine strukturfeste Anbindung des XZ-Riegelelementes 17 an der Flugzeugstruktur zur Aufnahme von Kräften realisiert. Die Rastelemente 20 und 20' sind einerseits jeweils an Verstrebungen 191 zweier Seitenteile 192 und 193 der Traverse 19 angeordnet und andererseits in das an der Oberseite 16 des Innenteils 7 eingebrachte Schienenprofilsystem 13 bzw. 13' eingerastet. Es ist insbesondere in Fig. 7 und Fig. 7A ersichtlich, dass das Schienenprofilsystem 13 bzw. 13' das Einrasten der Rastelemente 20, 20' in mehrere der ein Zoll beabstandeten Bohrungen 15, 15' ermöglicht und damit die Positionen des Riegelelementes 17 innerhalb des Frachtladesystems in Flugzeuglängsrichtung leicht veränderbar sind oder auch mehrere Rastelemente 20 zum Fixieren einer Seite der Traverse 19 gleichzeitig einrasten können. In Fig. 7A ist in einer Detailansicht ersichtlich, dass das pilzförmige Element 201 in das Schwalbenschwanzprofil 14' eingerastet ist und durch das in die Bohrung 15 eingeführte zylinderförmige Element 202 gesichert wird. Insbesondere ist es von vorteil, dass mit der Kopplung der Anschlusspunkte der Riegelelemente 17 mit den strukturfesten Zurrpunkten keine zusätzlichen tragenden Anschlusspunkte geschaffen werden müssen. Die erfindungsgemäßen Zurrpunktvorrichtungen 1 und 1' realisieren eine Doppelfunktion, was durch das wegklappen des Zurrelementes 2 ermöglicht wird. Wenn kein Frachtgut mittels des Zurrelementes 2 arretiert wird, kann - bei heruntergeklapptem Zurrelement 2 - die Befestigungsaufnahme 8 in der Ausbildung des Schienenprofils 13 genutzt werden zur Arretierung von Riegelelementen 17 oder möglicherweise auch weiteren Komponenten des Frachtladesystems.

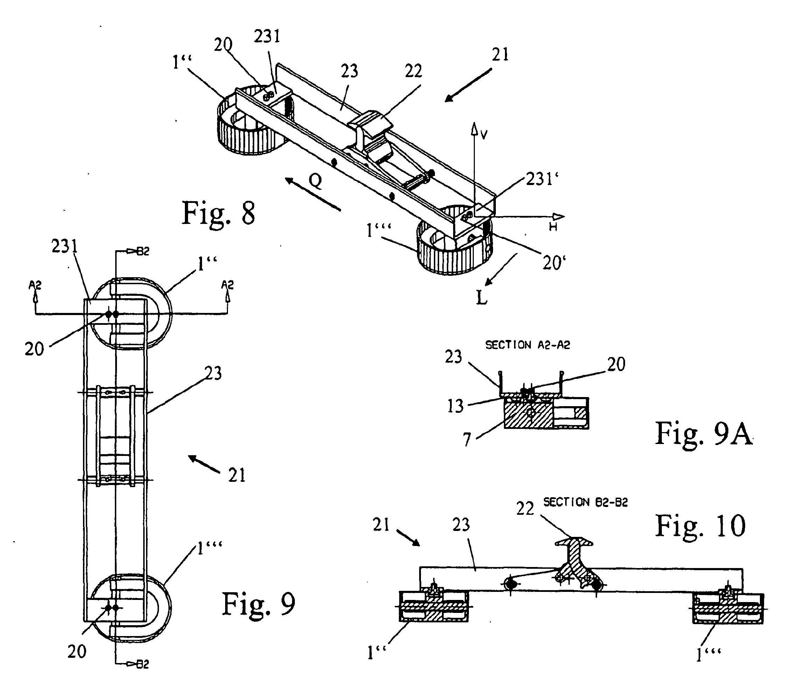

In den Fign. 8 bis 10 ist die Anordnung eines weiteren Riegelelementes 21, eines sogenannten YZ-Riegels, unter Verwendung von Zurrpunktvorrichtungen 1'' und 1''' zur Fixierung an einem Flugzeugboden in einer weiteren variante gezeigt. Im wesentlichen entspricht diese Ausführungsform der bereits in den Fign. 5 bis 7 beschriebenen Anordnung. Das Riegelelement 21 greift an ein (nicht gezeigtes) Frachtstück an und verriegelt das entsprechende Frachtgut. Eine dafür vorgesehene Riegelklaue 22 ist an einer Quertraverse 23 angeordnet, die mittels Rastelementen 20 und 20' in zwei im Flugzeugdeck parallel verlaufende Zurrpunktvorrichtungen 1 und 1'' fixiert wird und damit eine strukturfeste Anbindung des Riegelelementes 21 an der Flugzeugstruktur zur Aufnahme von Kräften realisiert. Die Rastelemente 20 und 20' sind in das an der Oberseite 16 des Innenteils 7 eingebrachte Schienenprofilsystem 13 eingerastet. Die Verstrebung 231 verläuft hier parallel zur Längsachse des Schienenprofils 13 bzw. 13'. Die Anzahl der Rastelemente 20, 20' kann entsprechend des Kräftebedarfs beliebig sein.

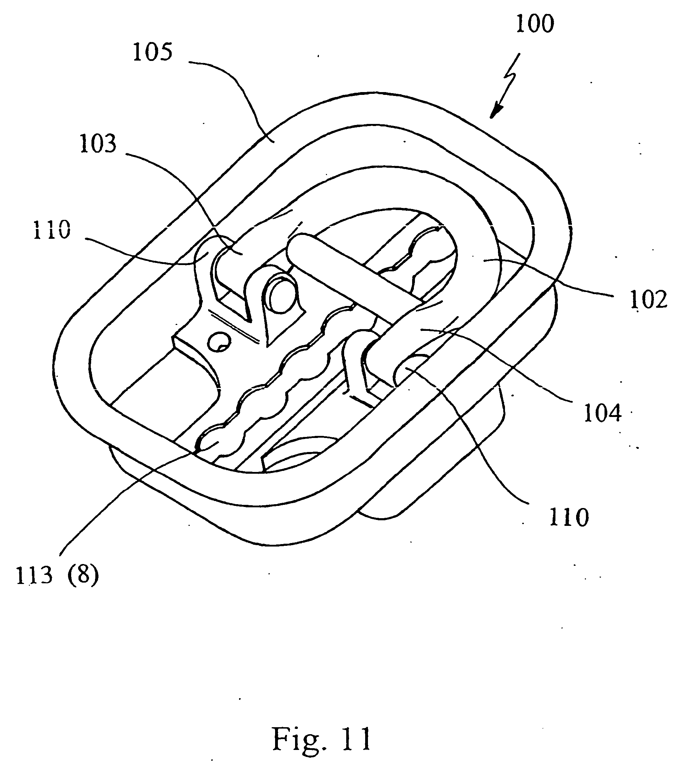

In Fig. 11 ist eine zweite Ausführungsform 100 einer Zurrpunktvorrichtung gezeigt. In wesentlichen Bestandteilen entspricht diese Ausführungsform 100 der bereits beschriebenen Zurrpunktvorrichtung 1. Die zweite Ausführungsform 100 weist jedoch eine andere Anordnung des Zurrelementes 102 und der Befestigungsaufnahme 8 auf. In einem topfartigen Gehäuse 105 ist das Zurrelement 102 mit seinen Endabschnitten 103 und 104 in Lagerstellen 110 schwenkbar gelagert. Das Schienenprofil 113 ist in einer Ebene unterhalb der Schwenkachse des Zurrelementes 102 angeordnet. Die Lage des Zurrelementes 102 ist hier nur beispielhaft gezeigt, möglich ist eine Anordnung des Sitzschienenprofils 113 auch in einer Ebene mit der Schwenkachse des Zurrelementes 102. Wichtig ist es hierbei jedoch, dass das Ablegen und die Funktion des Zurrelementes 102 nicht beeinträchtigt wird.

## Patentansprüche

1. Zurrpunktvorrichtung für ein Frachtladesystem eines Transportmittels insbesondere eines Flugzeuges, welches im wesentlichen ein Zurrelement (2) zum Verzurren von Lasten oder Gütern umfasst, das Zurrelement (2) an einem Gehäuse (5) gelagert und um eine Schwenkachse (11) drehbar ist**, dadurch gekennzeichnet, dass** das Gehäuse (5, 105) topfförmig ausgebildet ist und das Zurrelement (2) innerhalb des Gehäuses in eine horizontale Lage schwenkbar ist und weiterhin eine Befestigungsaufnahme (8) in Form eines Schienenprofilsystems (13) innerhalb des Gehäuses (5) vorgesehen ist, welches, horizontaler Lage des Zurrelementes (2) mindestens ein Verbindungselement (20, 20') für weitere Komponenten aufnehmen kann.

2. Zurrpunktvorrichtung nach Anspruch 1, **dadurch gekennzeichnet, dass** die Befestigungsaufnahme (8, 13) in einer Ebene oberhalb der Schwenkachse (11) angeordnet ist.

3. Zurrpunktvorrichtung nach Anspruch 1, **dadurch gekennzeichnet, dass** die Befestigungsaufnahme (8, 113) in einer Ebene unterhalb oder in Höhe der Schwenkachse (11) angeordnet ist.

4. Zurrpunktvorrichtung nach einem der Ansprüche 1 bis 3, **dadurch gekennzeichnet, dass** das Zurrelement (2) zwei Endabschnitte (3, 4) aufweist, die mittels eines verbindungsbolzens (9) an der Gehäusewandung (6, 6') sowie in einer Aufnahme (10) eines die Befestigungsaufnahme (8) tragenden Innenteils (7) gelagert sind.

5. Zurrpunktvorrichtung nach einem der Ansprüche 1 bis 3, **dadurch gekennzeichnet, dass** das Zurrelement (100) zwei Endabschnitte (103, 104) aufweist, die in Lagerstellen (110) drehbar gelagert sind.

6. Zurrpunktvorrichtung nach einem der Ansprüche 1 bis 5, **dadurch gekennzeichnet, dass** das Schienenprofilsystem (13) eine schwalbenschwanzförmige Querschnittsform (14) aufweist und weiterhin mehrere beabstandete Bohrungen (15) als Einrastlöcher vorgesehen sind.

7. Verwendung einer Zurrpunktvorrichtung nach Anspruch 6, **dadurch gekennzeichnet, dass** Rastelemente (20, 20') als Verbindungselemente zwischen dem Schienenprofilsystem (13) und weiteren Komponenten (17, 21)in Einrastlöcher (15) des Schienenprofilsystems (13) einrasten.

8. Verwendung einer Zurrpunktvorrichtung nach einem der Ansprüche 1 bis 7, **dadurch gekennzeichnet, dass** Riegelelemente (17, 21) in die Schienenprofilsysteme (13, 13') von mindestens zwei benachbart angeordneten Zurrpunktvorrichtungen (1, 1', 1'', 1''') eingeführt werden.

## Claims

1. Lashing point fixture for a cargo loading system of a means of transport, in particular of an aircraft, which substantially comprises a lashing element (2) for the lashing of loads or goods, the lashing element (2) is supported on a housing (5) and is rotatable around a pivot axis (11), **characterized in that** the housing (5, 105) is formed pot-shaped and the lashing element (2) is pivotable into a horizontal position inside the housing and furthermore a fastening holder (8) is provided in the form of a rail profile system (13) inside the housing (5), which system can take up at least one connecting element (20, 20') for further components in a horizontal position of the lashing element (2).

2. Lashing point fixture according to claim 1, **characterized in that** the fastening holder (8, 13) is disposed in a plane above the pivot axis (11).

3. Lashing point fixture according to claim 1, **characterized in that** the fastening holder (8, 113) is disposed in a plane below or at the level of the pivot axis (11).

4. Lashing point fixture according to one of claims 1 to 3, **characterized in that** the lashing element (2) has two end sections (3, 4), which are supported by means of a connecting pin (9) on the housing wall (6, 6') as well as in a holder (10) of an interior part (7) carrying the fastening holder (8).

5. Lashing point fixture according to one of claims 1 to 3, **characterized in that** the lashing element (100) has two end sections (103, 104), which are supported rotatably in bearings (110).

6. Lashing point fixture according to one of claims 1 to 5, **characterized in that** the rail profile system (13) has a dovetailed cross-sectional shape (14) and furthermore several spaced holes (15) are provided as latching holes.

7. Use of a lashing point fixture according to claim 6, **characterized in that** latching elements (20, 20') latch into latching holes (15) of the rail profile system (13) as connecting elements between the rail profile system (13) and further components (17, 21).

8. Use of a lashing point fixture according to one of claims 1 to 7, **characterized in that** locking bar elements (17, 21) are inserted into the rail profile systems (13, 13') of at least two lashing point fixtures (1, 1', 1'', 1''') arranged adjacently.

## Revendications

1. Dispositif de point d'arrimage pour un système de chargement de cargaison d'un moyen de transport, notamment d'un avion, qui comprend essentiellement un élément d'arrimage (2) pour arrimer des charges ou des marchandises, l'élément d'arrimage (2) étant monté sur un boîtier (5) et pouvant tourner autour d'un axe de pivotement (11), **caractérisé par le fait que** le boîtier (5, 105) est conformé en godet et l'élément d'arrimage (2) peut être amené par pivotement dans une position horizontale à l'intérieur du boîtier et qu'il est en outre prévu un logement de fixation (8) sous la forme d'un système à profil de rail (13) à l'intérieur du boîtier (5), lequel système, lorsque l'élément d'arrimage (2) est dans la position horizontale, peut recevoir au moins un élément de fixation (20, 20') pour d'autres composants.

2. Dispositif de point d'arrimage selon la revendication 1, **caractérisé par le fait que** le logement de fixation (8, 13) est disposé dans un plan situé au-dessus de l'axe de pivotement (11).

3. Dispositif de point d'arrimage selon la revendication 1, **caractérisé par le fait que** le logement de fixation (8, 113) est disposé dans un plan situé en dessous de l'axe de pivotement (11) ou au même niveau que celui-ci.

4. Dispositif de point d'arrimage selon une des revendications 1 à 3, **caractérisé par le fait que** l'élément d'arrimage (2) présente deux parties d'extrémité (3, 4) qui sont montées sur la paroi de boîtier (6, 6'), à l'aide d'un axe de liaison (9), ainsi que dans une partie réceptrice (10) d'un élément intérieur (7) portant le logement de fixation (8).

5. Dispositif de point d'arrimage selon une des revendications 1 à 3, **caractérisé par le fait que** l'élément d'arrimage (100) présente deux parties d'extrémité (103, 104) qui sont montées avec possibilité de rotation dans des points d'articulation (110).

6. Dispositif de point d'arrimage selon une des revendications 1 à 5, **caractérisé par le fait que** le système à profil de rail (13) présente une section transversale (14) en forme de queue d'aronde et qu'il est en outre prévu plusieurs trous (15) espacés les uns des autres, en tant que trous d'encliquetage.

7. Utilisation d'un dispositif de point d'arrimage selon la revendication 6, **caractérisée par le fait que** des éléments d'encliquetage (20, 20'), en tant qu'éléments de fixation entre le système à profil de rail (13) et d'autres composants (17, 21), s'enclenchent dans des trous d'encliquetage (15) du système à profil de rail (13).

8. Utilisation d'un dispositif de point d'arrimage selon une des revendications 1 à 7, **caractérisée par le fait que** des éléments de verrouillage (17, 21) sont engagés dans les systèmes à profil de rail (13, 13') d'au moins deux dispositifs de point d'arrimage (1, 1', 1", 1"') contigus.
